Europäisches Patentamt

(19) European Patent Office

Office européen des brevets

(11) Publication number: **0 193 526**
**B1**

# EUROPEAN PATENT SPECIFICATION

(12)

(45) Date of publication of patent specification: **22.08.90**

(21) Application number: **84903157.0**

(22) Date of filing: **27.08.84**

(86) International application number:
**PCT/AU84/00161**

(87) International publication number:
**WO 86/01372 13.03.86 Gazette 86/06**

(51) Int. Cl.⁵: **A 01 D 84/00, A 01 D 82/00,**
**A 01 F 15/00**

(54) **METHOD AND APPARATUS FOR TREATING HAY.**

(43) Date of publication of application:
**10.09.86 Bulletin 86/37**

(45) Publication of the grant of the patent:
**22.08.90 Bulletin 90/34**

(84) Designated Contracting States:
**DE FR GB**

(56) References cited:
**AU-A-1 243 483**
**AU-A-6 191 580**
**AU-B-3 868 578**
**US-A-2 909 881**
**US-A-3 585 730**
**US-A-4 257 215**

(73) Proprietor: **RIYATE PTY LIMITED**
**Suite 1, Level 3 125 York Street**
**Sydney, New South Wales 2000 (AU)**

(72) Inventor: **Maher, Jack**
**deceased**
**(AU)**

(74) Representative: **MacGregor, Gordon**
**ERIC POTTER & CLARKSON St. Mary's Court St.**
**Mary's Gate**
**Nottingham, NG1 1LE (GB)**

Courier Press, Leamington Spa, England.

## Description

### Field of the invention

This invention relates to the treating of hay prior to baling.

For the sake of brevity, the invention will be described in relation to lucerne (alfalfa), however, it is to be understood that the invention is not limited thereto as it may be applied to other crops that are used to produce hay.

### Background art

When the lucerne is ready to harvest it is cut leaving a stubble of approximately 5 cm. The cut lucerne is raked mechanically into parallel rows called windrows and left to dry for 3 to 4 days. The drying time is dependent upon climatic conditions and allows the optimum baling moisture content to be attained, at approximately 17% to 20%. Baling is carried out mechanically by a machine with a forwardly-mounted pick up reel.

When baling commences, the pick up reel feeds the cured windrow material into the compressing chamber of the hay-baler where it is compressed into masses of appropriate size and weight and then tied with wire or twine to form bales. The bales are allowed to fall onto the ground at regular intervals and are then picked up and taken to a suitable storage site for subsequent disposal either directly as stock feed or for the production of chaff or meal at some later date.

One problem associated with the formation of hay from lucerne is that the leaf of the lucerne becomes brittle when dried. If handled in this condition, the leaf will break away from the stem of the plant thereby reducing the crop's nutritional content as well as the market value of the crop.

The production of a premium product (which will command a premium price) depends on baling at the optimum moisture content which can be difficult to achieve as weather conditions are unpredictable.

Baling with excessively moist hay (i.e.: over 20% moisture content) leads to mould growth, deterioration during storage and an attendant risk of spontaneous combustion. Conversely, baling under too dry conditions results in leaf fracture and subsequent loss of nutrient content and a reduced market price. Exacerbating the problem of optimising moisture content is the characteristic differential drying rate between leaf and stem. The leaf dries faster than the stem so that when the stem reaches optimal baling moisture content, the leaf is overdry, brittle and easily fractured when handled.

The farmer overcomes this brittle leaf problem by baling at night or early morning when moisture from prevailing dew conditions makes the leaf more supple. Ideally, baling is conducted whenever the dew forms, usually over a three or four hour period say between 3 am and 9 am. Dew does not form regularly or predictably and during the summer harvest time, long periods without dew may occur—up to 10 days or more.

Conversely, the dew may be too heavy and an additional time is required for the hay to dry. In Australia, a market survey has shown that such unfavourable conditions typically affect two to three cuts out of the usual six in the growing season. That is, one-third of the lucerne grower's income can be adversely affected apart from losses due to storm damage. After excessive drying, baled hay can only command a low market price. Under extreme conditions, the windrowed hay may be raked aside and abandoned.

Alternatively it has been proposed to treat the hay immediately prior to baling, using a suitable hay container, so that it is in a suitable condition for baling.

One suitable hay conditioner is disclosed in AU—B—38685/78 which describes a hay conditioner having an elongated treatment chamber with opposed side walls and a top wall by which a longitudinal portion of a windrow is enclosed, a plurality of steam outlet nozzles within the treatment chamber and means for supplying steam to the nozzles whereby the windrowed material is treated with steam emerging from the outlet nozzles as the hay conditioner is caused to travel along the row. This known hay conditioner, however, further comprises a conveyor forming the bottom of the treatment chamber.

It is an object of the present invention to provide a process of an apparatus for conditioning hay which simulates the action of dew to make the leaf supple immediately prior to baling.

### Disclosure of invention

According to the invention, there is provided a hay conditioner which comprises an elongated treatment cover having opposed side walls and a top wall adapted to be positioned so as to enclose substantially a longitudinal portion of a windrow lying on the ground, over which the hay conditioner is caused to travel, a plurality of steam outlet nozzles associated with the treatment cover and means for supplying steam to the nozzles whereby the windrowed material is treated with steam emerging from said steam outlet nozzles as the hay conditioner is caused to progress along the windrow.

The invention also provides a method of treating hay using a hay conditioner as set out in the last preceding paragraph prior to baling wherein the hay is subjected to steam treatment within a cover positioned to enclose a longitudinal portion of a windrow lying on the ground, wherein the moisture content of the steam is less than 1.5%, for sufficient time to allow some of the steam to penetrate the cell structure of the hay.

### Brief description of the drawings

In order that the invention may be more readily understood and put into practical effect, reference will now be made to the accompanying drawings in which:

Fig. 1 is a schematic side elevational view of a hay conditioner according to one embodiment of the invention,

Fig. 2 is a top plan view of the hay conditioner shown in Fig. 1,

Fig. 3 is a partial perspective view, on an enlarged scale, showing the leading end of the hay conditioner, and,

Fig. 4 is a partial perspective view of a second embodiment of the invention.

Best mode of carrying out the invention

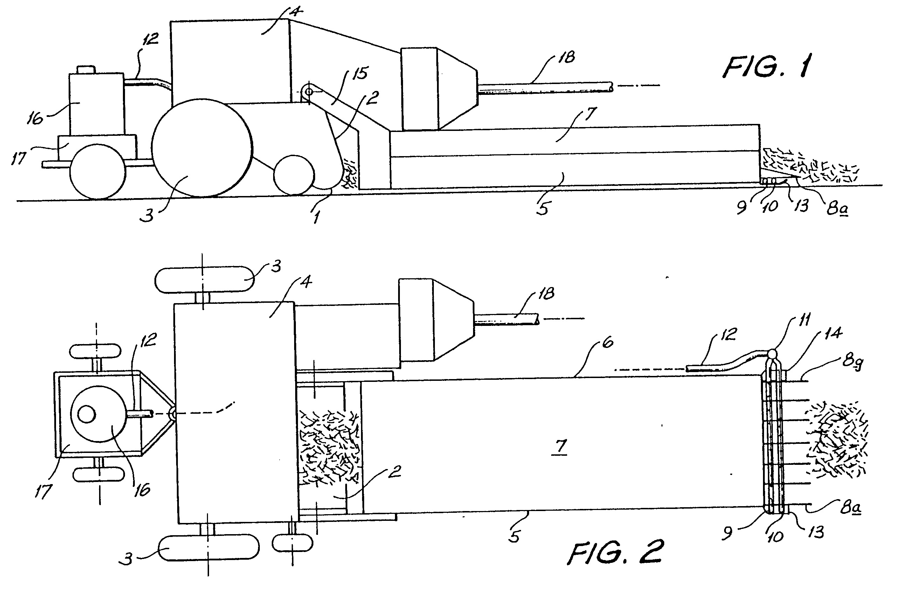

The hay conditioner shown in Figs. 1 to 3 is mounted on a conventional tractor-towed hay-baler having a pick-up reel 1 that includes spring biased rake tines rotating within a slotted guard arrangement. The pick-up reel 1 feeds the windrowed material into a feed opening 2 where a feeder bar moves the material into the baling chamber 4 for compression into bales. Such a hay-baler is supported by wheels 3 and is coupled to the take off point of a tractor. The baler includes either a twine-knotting or a wire-twisting mechanism by means of which the compressed bales are completed before they are allowed to fall onto the ground.

The hay conditioner includes a treatment cover which in this instance consists of an elongated, tunnel-like structure having opposed side walls 5 and 6 joined by a top wall or hood 7 of part circular cross section. The treatment cover is so dimensioned that it will be able to span the width of a windrow.

Hay pick-up means may be provided at the forward end of the treatment cover if desired. In this instance, the hay pick up means includes a number of V-shaped elements 8a to 8g which are equally spaced across the forward end of the treatment cover with their apices pointing forwardly and downwardly so that they terminate fractionally above ground level. The weight of the forward end of the treatment cover is sufficient to ensure that the hay conditioner skids along the ground on skid means 13 and 14.

Steam manifolds 9 and 10 extend between the skid means 13 and 14 and provide a convenient support base for the V-shaped elements. In this instance, two steam manifolds 9 and 10 are shown, but it will be realised that more or fewer may be used.

Each of the steam manifolds is provided with a plurality of steam outlet nozzles and it will be noted that manifold 9 has its nozzles equally spaced over its whole length but that manifold 10 has its nozzles closer together and only in the middle section of the manifold. Such an arrangement ensures that windrows of different widths may be efficiently steam treated without wastage of steam. Flow of steam to the manifolds is controlled by a cock 11 whereby the steam conduit 12 may be selectively connected to manifold 9 or manifold 10.

The steam conduit 12 is connected to the steam generator 16 (of conventional kind) which is mounted on the two wheeled trailer 17 detachably connected to the rear end of the hay baler. The trailing position of the trailer 17 is immaterial, but should be such that it does not interfere with the discharge of bales from the baling chamber 4. Steam generator 16 may be adapted for operation from the tractor cab.

The forward end of the treatment cover may be modified as desired. For example, the V-shaped elements may be omitted leaving the steam manifolds to act as a hay pick-up means, sliding beneath the windrowed material as the conditioner is moved along the windrow. Thus, the V-shaped elements may be arranged so as to be readily detachable from the manifolds or, alternatively, the manifolds and integral V-shaped elements may be detached from the skids 13 and 14 and replaced by a steam manifold not having the V-shaped elements. Furthermore, the steam could be introduced through the top or sides of the cover.

In this instance, the hay conditioner is connected to the hay baler by means of the cantilever arms 15. The arms 15 are raised and lowered by a hydraulic arrangement (not shown) under the control of the operator of the hay-baler. It will be appreciated that the conditioner should be mounted on the hay-baler so that the longitudinal axis of the treatment cover is in register with the centre line of the feed opening of the hay-baler.

The treatment cover is of sufficient length to maintain the steam environment around the windrow for approximately 5 seconds which is the time necessary for optimum penetration of steam into the cell structure of the leaf of the dried lucerne. The minimum 5 second retention time necessitates that the hay conditioner travels at approximately 3 km/hr when treating very dry lucerne. This compares with a normal speed during baling of approximately 6 km/hr or top speed with fairly light windrows of approximately 10 km/hr. This slow baling speed may be overcome by pre-raking light windrows into heavier windrows. This may be achieved using existing hay rakes.

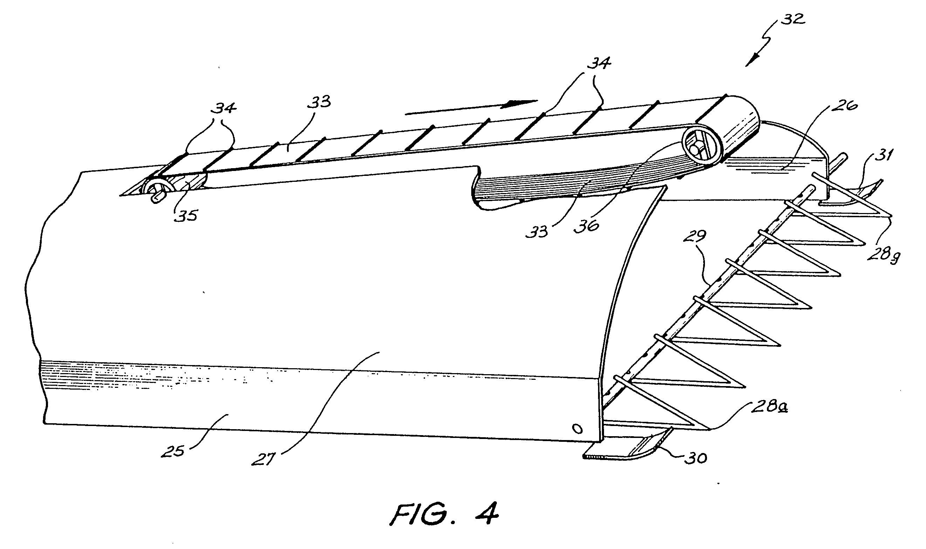

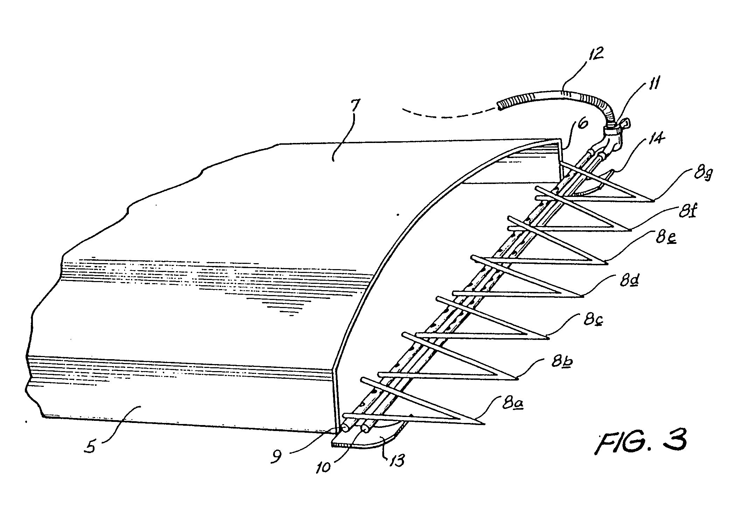

Figure 4 shows a second embodiment of the present invention which has particular application in windy or blustery conditions. Under such conditions, windrow material tends to become 'teased' or 'fluffed out' to such an extent that the tunnel-like structure 5, 6 and 7 shown in Figs. 1 to 3 is too close to the ground to clear the windrow.

Thus, Fig. 4 depicts an elongated tunnel-like structure having opposed sidewalls 25 and 26 joined by a top wall or hood 27 of varying part-circular cross section. Hood 27 is configured so as to be perhaps 40 to 50 cms above the ground at the leading end reducing to, say, 28 cms at a point 130 cms back drom the leading end. From this point to the trailing end of the structure, the top of hood 27 is parallel to sidewalls 25 and 26.

As in the previously described embodiment, the forward end of the cover may be furnished with V-shaped elements 28a to 28g and one or more steam manifold 29. Skids 30 and 31, or castors or the like, are provided as before.

A feed conveyor 32 may be positioned at the top of the cover to provide a driving run from the open end of the cover into the cover proper. This may take the form of an endless belt 33, having transverse battens 34, travelling about rollers or pulleys 35 and 36 journalled in the top of the hood, the width of the belt being perhaps in the order of 10 cms. The function of this feed conveyor is to prevent windrow material from being 'bulldozed' by the cover. After steaming, the new limper hay is deposited back onto the ground and formed into a windrow more compact than it was before being conditioned.

The preferred mode of operation of the hay conditioner according to the embodiments of the present invention shown in the drawings is as follows: as the hay-baler is towed along so as to traverse a windrow, the hay is lifted by the V-shaped elements of the pick up means and the windrowed material is then steamed by jets of steam from the manifold. In the modification of the invention without the pick-up means, the windrowed material is both lifted and steamed by the manifold. In either case, the steamed windrow material falls back onto the ground to reform the windrow. In the case of steam fed from the top or sides of the cover, the windrowed material will not be disturbed. Until the hay is picked up by the pick up reel of the haybaler, it is covered by the treatment cover of the hay conditioner. The mechanisms of the hay-baler are driven by shaft 18 which is universally coupled to the power take off shaft of the towing tractor.

While the treatment cover should be as short as possible to enhance manoeuvrability, it should nevertheless be long enough to condition hay properly in its passage thereover. In practice, a length of the order of 3 to 4 metres will be found to be suitable. To aid the travel of the windrow material through the treatment cover, a feed roller arrangement may well be incorporated in the elongated, box-like structure.

The steam geneator 16 may be of any convenient kind. Empirical testing indicates that dry steam at 35—45 pounds/square inch pressure is optimal for the conditioning of lucerne leaf. The term "dry" steam embraces steam having less than 1.5% moisture content.

The hay treatment process of the invention uses "dry" steam as a dew substitute to permeate the cell structure of the leaf of the lucern or other hay crop with sufficient moisture (almost instantaneously) to restore its malleable/supple properties so that it is able to undergo mechanical handling without degrading the overall plant structure. Retention of the leaf in the cover for a predetermined time is essential to obtain the required moisture content within the leaf so that the nutritional value of the crop will be retained when it is baled.

"Dry" steam is necessary to achieve rapid, effective and preferential permeation of the leaf (with respect to the plant stem) so as to be practical in a mobile situation.

Small water droplets have been tried and found unsuccessful because the droplet size has been too large and surface tension effects have prevented rapid penetration of the leaf surface. Also, excess moisture (droplets) was left on the stem, raising the overall moisture content of the baled crop. With the dry steam, only the leaf is able to pick up significant moisture and the thick, waxy stem is unaffected; hence the overall moisture content of the baled crop is not adversely affected and remains optimum for storage (as is the case with natural dew).

Hence, instigation of this new improved method for harvesting hay for baling at the optimum overall moisture content requires:

1. A source of dry steam (from a steam generator or boiler).

2. A successful combination of nozzle design/ size/geometry/number, steam flow rate, steam temperature and pressure so that the steam effectively penetrates the crop before too much is condensed.

3. A contained environment for efficient steam processing of the crop and to minimise moisture losses from the leaf before the crop enters the baling chamber of the baler.

4. An appropriate retention time of the crop in the steaming environment to allow effective spread of the steam to all the leaf surfaces and effective penetration of the steam from the leaf surface to the plant cells within the leaf. (This takes about 5 seconds with the present embodiment of the invention).

Thus, the advantages of this new system are:

(a) Optimum bale and leaf moisture content is achievable under a variety of weather conditions and time of day without reliance on dew.

(b) The farmer has more control over baled hay product quality without reliance on weather.

(c) The crop is baled faster—minimising leaching, bleaching, drying and storm losses and increasing annual yield (allowing faster regrowth of the next crop).

## Claims

1. A hay conditioner comprising an elongated treatment cover having opposed side walls (5, 6 and 25, 26) and a top wall (7 and 27) adapted to be positioned so as to enclose substantially a longitudinal portion of a windrow lying on the ground over which the hay conditioner is caused to travel, a plurality of steam outlet nozzles (9, 10 and 29) associated with the treatment cover and means (12) for supplying steam to the nozzles whereby the windrowed material is treated with steam emerging from said steam outlet nozzles as the hay conditioner is caused to progress along the windrow.

2. A hay conditioner as claimed in Claim 1 and including hay pick-up means (8a to 8g and 28a to 28g) mounted forwardly of the forward end of the treatment cover.

3. A hay conditioner as claimed in Claim 2 wherein the hay pick-up means includes a plurality of V-shaped elements (8a to 8g and 28a to 28g) spaced across said forward end of the treatment cover with their apices pointing forwardly and downwardly.

4. A hay conditioner as claimed in Claim 1, 2 or 3 wherein the steam outlet nozzles are constituted by apertures formed in at least one steam manifold (9, 10 and 29) disposed adjacent the forward end of the treatment cover, or are located in the top (7 and 27) or side walls (5, 6 and 25, 26) of the cover.

5. A hay conditioner as claimed in Claim 1 including means (15) for mounting the conditioner upon a hay-baler and further including means for raising and lowering the hay conditioner with respect to the hay-baler.

6. A hay conditioner as claimed in Claim 1 wherein the forward portion of the treatment cover is of a greater height than that of the remaining portion and wherein there is provided a feed conveyor (32) adapted to propel the hay through the treatment cover.

7. A method of treating hay using the hay conditioner of claim 1, prior to baling wherein the hay is subjected to steam treatment within a cover positioned to enclose a longitudinal portion of a windrow lying on the ground, wherein the moisture content of the steam is less than 1.5%, for sufficient time to allow some of the steam to penetrate the cell structure of the hay.

8. A method of treating hay according to Claim 7 wherein the hay is retained in the treatment cover for five seconds.

**Patentansprüche**

1. Heukonditionierapparat, umfassend einen langgestreckten Behandlungskasten mit gegenüberstehenden Seitenwänden (5, 6 und 25, 26) sowie einer Oberseite (7 und 27), der so positionierbar ist, daß er einen Längsabschnitt eines auf dem Erdboden liegenden Schwadens, über den hinweg der Heukonditionierapparat in Fahrbewegung versetzt wird, praktisch einschließt, eine Anzahl von dem Behandlungskasten zugeordneten Dampfauslaßdüsen (9, 10 und 29) und eine Einrichtung (12) zum Zuspeisen von Dampf zu den Düsen, wobei das in Schwaden angeordnete Material mit dem aus den Dampfauslaßdüsen ausströmenden Dampf behandelt wird, während der Heukonditionierapparat längs des Schwadens in Bewegung gesetzt wird.

2. Heukonditionierapparat nach Anspruch 1, mit einer vorderhalb des Vorderendes des Behandlungskastens montierten Heuaufnahmeeinrichtung (8a—8g und 28a—28g).

3. Heukonditionierapparat nach Anspruch 2, dadurch gekennzeichnet, daß die Heuaufnahmeeinrichtung eine Anzahl von V-förmigen Elementen (8a—8g und 28a—28g) aufweist, die über das Vorderende des Behandlungskastens auf Abstände verteilt sind und deren Spitzen nach vorn und unten weisen.

4. Heukonditionierapparat nach Anspruch 1, 2 oder 3, dadurch gekennzeichnet, daß die Dampfauslaßdüsen durch in mindestens einem Dampfverteiler (9, 10 und 29), der im Bereich des Vorderendes des Behandlungskastens angeordnet ist, ausgebildete Öffnungen gebildet oder in Oberseite (7 und 27) oder Seitenwänden (5, 6 und 25, 26) des Kastens angeordnet sind.

5. Heukonditionierapparat nach Anspruch 1, mit einer Einrichtung (15) zum Montieren des Konditionierapparates auf einer Heuemballiervorrichtung und mit einer Einrichtung zum Anheben und Absenken des Heukonditionierapparats gegenüber der Heuemballiervorrichtung.

6. Heukonditionierapparat nach Anspruch 1, dadurch gekennzeichnet, daß der Vorderabschnitt des Behandlungskastens eine größere Höhe aufweist als der restliche Abschnitt und daß ein Zuführförderer (32) vorgesehen ist, der das Heu durch den Behandlungskasten hindurch zu transportieren vermag.

7. Verfahren zum Behandeln von Heu mittels des Heukonditionierapparats nach Anspruch 1 vor dem Emballieren, wobei das Heu einer Dampfbehandlung in einem Kasten, der so positioniert ist oder wird, daß er einen Längsabschnitt eines auf dem Erdboden liegenden Schwadens einschließt, bei einem Feuchtigkeitsgehalt des Dampfes von weniger als 1,5% während einer ausreichend langen Zeitspanne, um einen Teil des Dampfes die Zellenstruktur des Heus durchdringen zu lassen, unterworfen wird.

8. Verfahren zum Behandeln von Heu nach Anspruch 7, dadurch gekennzeichnet, daß das Heu fünf Sekunden lang im Behandlungskasten gehalten wird.

**Revendications**

1. Machine à conditionner le foin comprenant un couvercle de traitement allongé présentant des parois latérales opposées (5, 6 et 25, 26) et une paroi supérieure (7 et 27) pouvant être postionnée de façon à englober sensiblement une portion longitudinale d'un andain déposé sur le sol sur lequel on fait passer la machine à conditionner le foin, une pluralité de tuyères de sortie de vapeur (9, 10 et 29) associées au couvercle de traitement et des moyens (12) pour fournir la vapeur aux tuyères, moyennant quoi le produit andainé est traité avec la vapeur provenant des tuyères de sortie de vapeur à mesure que la machine à conditionner le foin avance le long de l'andain.

2. Machine à conditionner le foin selon la revendication 1 et comprenant des moyens de ramassage de foin (8a jusqu'à 8g et 28a jusqu'à 28g) montés vers l'avant de l'extrémité avant du couvercle de traitement.

3. Machine à conditionner le foin selon la revendication 2, dans laquelle les moyens de ramassage du foin comprennent une pluralité d'éléments en forme de V (8a jusqu'à 8g et 28a jusqu'à 28g) espacés sur toute l'extrémité avant du couvercle de traitement et avec leur sommet pointant vers l'avant et vers le bas.

4. Machine à conditionner le foin selon la revendication 1, 2 ou 3, dans laquelle les tuyères de sortie de vapeur sont constituées par des ouvertures formées dans au moins un collecteur de vapeur (9, 10 et 28) disposé de façon contiguë à l'extrémité avant du couvercle de traitement, ou encore sont situées sur les parois supérieures (7 et 27) ou latérales (5, 6 et 25, 26) du couvercle.

5. Machine à conditionner le foin selon la revendication 1 comprenant des moyens (15) destinés à monter la machine à conditionner sur une botteleuse de foin et comprenant de plus des moyens pour relever et abaisser la machine à conditionner le foin par rapport à la botteleuse de foin.

6. Machine à conditionner le foin selon la revendication 1 dans laquelle la position avant du couvercle de traitement présente une plus grande hauteur que celle de la portion restante et dans laquelle il est prévu un convoyeur d'amenée (32) apte à propulser le foin à travers le couvercle de traitement.

7. Procédé de traitement du foin mettant en oeuvre la machine de conditionnement du foin selon la revendication 1 avant le bottelage, dans lequel le foin est soumis à un traitement par la vapeur à l'intérieur d'un couvercle positionné de façon à englober une portion longitudinale d'un andain déposé sur le sol, dans lequel la teneur en humidité de la vapeur est inférieure à 1,5%, pendant une durée suffisante pour permettre à une partie de la vapeur de pénétrer dans la structure cellulaire du foin.

8. Procédé de traitement du foin selon la revendication 7, dans lequel le foin est retenu dans le couvercle de traitement pendant 5 secondes.

FIG. 1

FIG. 2

FIG. 4

FIG. 3